# EUROPEAN PATENT APPLICATION

(11) **EP 4 554 295 A1**
(43) Date of publication of application: **14.05.2025**
(21) Application number: 23860647.9
(22) Date of filing: 05.07.2023
(51) Int. Cl.: H04W 64/00, H04W 24/08, G01S 5/02, H04B 17/318, H04L 67/75

(54) **ELECTRONIC DEVICE AND CONTROL METHOD THEREOF**

(30) Priority: 02.09.2022 KR 20220111548
(71) Applicant: Samsung Electronics Co., Ltd., Suwon-si, Gyeonggi-do 16677 (KR)
(72) Inventor: KWON, Soonhong, Suwon-si, Gyeonggi-do 16677 (KR); CHO, Hosik, Suwon-si, Gyeonggi-do 16677 (KR)
(74) Representative: Gulde & Partner
(86) International application number: PCT/KR2023/009497
(87) International publication number: WO 2024/048964

(57) **Abstract**

An electronic device is provided. The electronic device includes a display, a communication device for transmitting/receiving a signal to/from a wireless router, memory storing at least one instruction, and at least one processor that executes the at least one instruction to measure signal strength with each of a plurality of wireless routers at a plurality of positions within a preset space to generate fingerprint information, control the communication device to measure first signal strengths of a plurality of first available wireless routers at a plurality of spaced positions adjacent to a first measurement position within the preset space, predict positions of the plurality of first available wireless routers based on the measured first signal strengths, determine a subsequent second measurement position within the preset space based on the predicted positions and distances between the predicted positions, and control the display to display information about the determined second measurement position.

## Description

### [Technical Field]

The present disclosure relates to an electronic device that determines a position where signal strength can be measured to generate fingerprint information for a wireless router.

### [Background Art]

An electronic device that generates fingerprint information of a wireless router can be applied and used in various devices such as computers, smartphones, tablet PCs, and laptops. In particular, the electronic device may be controlled to display a position where the signal strength of the wireless router can be measured on the display to efficiently generate fingerprint information.

### [DISCLOSURE]

### [Technical Solution]

An electronic deviceaccording to an embodiment includes a display, a communication device for transmitting/receiving a signal to/from a wireless router, memory storing at least one instruction, a processor that executes the at least one instruction to measure signal strength with each of a plurality of wireless routers at a plurality of positions within a preset space to generate fingerprint information. The processor controls the communication device to measure first signal strengths of a plurality of first available wireless routers at a plurality of spaced positions adjacent to a first measurement position within the preset space, predicts positions of the plurality of first available wireless routers based on the measured first signal strengths, determines a subsequent second measurement position within the preset space based on the predicted positions and distances between the predicted positions, and controls the display to display information about the determined second measurement position

In a controlling method of an electronic device that, by measuring signal strength with each of a plurality of wireless routers at a plurality of positions within a preset space, generates fingerprint information regarding the preset space according to an embodiment, the method includes controlling a communication device to measure first signal strengths of a plurality of first available wireless routers at a plurality of spaced positions adjacent to a first measurement position within the preset space, predicting positions of the plurality of first available wireless routers based on the measured first signal strengths, determining a subsequent second measurement position within the preset space based on the predicted positions and distances between the predicted positions, and controlling the display to display information about the determined second measurement position.

In a non-transitory computer-readable medium storing computer instructions that execute a controlling method of an electronic device including a display, a communication device for transmitting/receiving a signal to/from a wireless router, memory storing at least one instruction and a processor that, by executing the at least one instruction to measure signal strength with each of a plurality of wireless routers at a plurality of positions within a preset space to generate fingerprint information regarding the preset space, the controlling method includes controlling a communication device to measure first signal strengths of a plurality of first available wireless routers at a plurality of spaced positions adjacent to a first measurement position within the preset space, predicting positions of the plurality of first available wireless routers based on the measured first signal strengths, determining a subsequent second measurement position within the preset space based on the predicted positions and distances between the predicted positions, and controlling the display to display information about the determined second measurement position.

### [DESCRIPTION OF DRAWINGS]

FIG. 1 is a view provided to explain an electronic device according to an embodiment;
FIG. 2 is a block diagram provided to explain configuration of an electronic device according to an embodiment;
FIG. 3 is a block diagram provided to explain detailed configuration of an electronic device according to an embodiment;
FIGS. 4 to 6 are views provided to explain a process of determining a measurement position according to an embodiment;
FIG. 7 is a view provided to explain a process of changing a position of a wireless router according to an embodiment ;
FIG. 8 is a view provided to explain a process of generating interpolated signal strength according to an embodiment ;
FIG. 9 is a view provided to explain a process of determining a measurement position according to an embodiment ;
FIG. 10 is a flowchart provided to explain a process of determining a measurement position according to an embodiment ;
FIG. 11 is a flowchart provided to explain a detailed process of determining a measurement position according to an embodiment ; and
FIG. 12 is a sequence view provided to explain a controlling method of an electronic device and a server according to an embodiment.

### [DETAILED DESCRIPTION OF EMBODIMENTS]

The embodiments of the present disclosure may be modified in various ways, and may have various embodiments, so specific embodiments are illustrated in the drawings and described in detail in the detailed description. However, it is to be understood that the disclosure is not limited to specific exemplary embodiments, but include all modifications, equivalents, and/or alternatives according to exemplary embodiments of the disclosure. Throughout the description of the accompanying drawings, similar components may be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following exemplary embodiments may be modified in several different forms, and the scope of the technical spirit of the disclosure is not limited to the following exemplary embodiments. Rather, these exemplary embodiments make the disclosure thorough and complete, and are provided to completely transfer the spirit of the disclosure to those skilled in the art.

Terms used in the disclosure are used only to describe specific exemplary embodiments rather than limiting the scope of the disclosure. Singular forms are intended to include plural forms unless the context clearly indicates otherwise.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

On the other hand, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

In exemplary embodiments, a 'module' or a '~er' may perform at least one function or operation, and be implemented as hardware or software or be implemented as a combination of hardware and software. In addition, a plurality of 'modules' or a plurality of '~er' may be integrated into at least one module and be implemented as at least one processor (not shown) except for a 'module' or a '~er' that needs to be implemented as specific hardware.

Meanwhile, various elements and regions in the drawings are schematically drawn in the drawings. Therefore, the technical concept of the disclosure is not limited by a relative size or spacing drawn in the accompanying drawings.

Hereinafter, an embodiment according to the present disclosure will be described in detail with reference to the accompanying drawings so that a person with ordinary knowledge in the technical field to which the present disclosure belongs can easily implement the present disclosure.

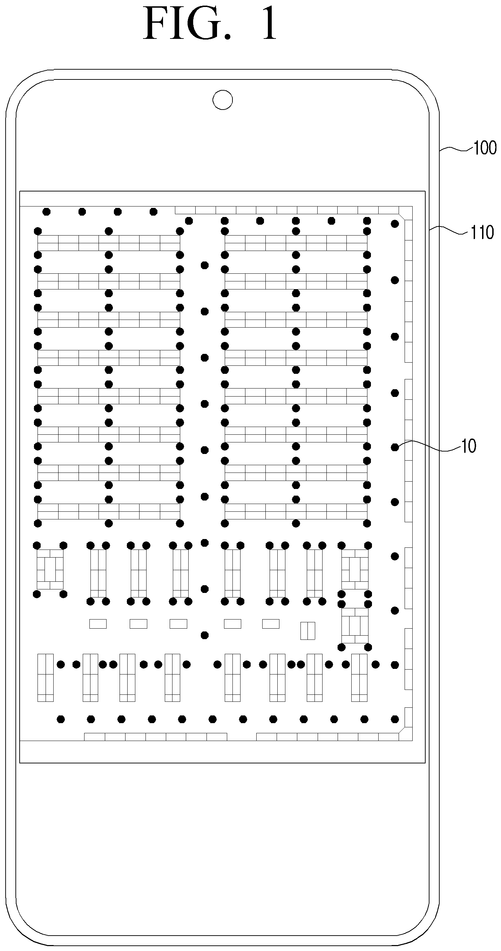

FIG. 1 is a view provided to explain an electronic device according to an embodiment.

Referring to FIG. 1, an electronic device 100 may be implemented in various forms and purposes.

For example, the electronic device 100 may be implemented in the form of a desktop computer, a laptop computer, a smartphone, a tablet PC, or the like. In addition, the electronic device 100 may be used to generate fingerprint information of wireless routers installed in in large marts, airports, factories, logistics warehouses, etc. Here, the fingerprint information of the wireless routers may be geo-position information, which may be a database of signal strengths received from the wireless routers at each specific position. In other words, the fingerprint information of the wireless routers may be generated as a look-up table of signal strengths of the wireless routers corresponding to specific location coordinates. For example, when the signal strength of wireless router 1 is measured as -37.6 dBm and the signal strength of wireless router 2 is measured as -17.8 dBm at the preset location (2, 2), and the signal strength of wireless router 1 is measured as -34.23 dBm and the signal strength of wireless router 2 is measured as -41.2 dBm at the location (1, 2), the electronic device 100 may create a lookup table of the signal strengths of wireless routers 1 and 2 for each measured coordinate to generate fingerprint information.

Here, the signal strength of the wireless router may be a Received Signal Strength Indicator (RSSI) from the wireless router. In other words, the electronic device 100 may measure the signal strength from each of a plurality of wireless routers at a plurality of positions within a preset space to generate fingerprint information.

In generating a fingerprint of a wireless router, the user may preset a measurement position of signal strength within a preset space and then, measure the signal strength of the wireless router at the corresponding measurement position. In general, the more preset measurement positions, the higher the accuracy, but in order to achieve higher accuracy, it is necessary to preset a large number of measurement positions and directly measure the signal strength of the wireless router at the corresponding measurement position, which can consume significant human and material resources and time.

Meanwhile, the electronic device 100 may determine a measurement position 10 to measure the signal strength of the wireless router based on the position of the plurality of wireless routers. The electronic device 100 may also control to display the determined measurement position 10 on a display 110.

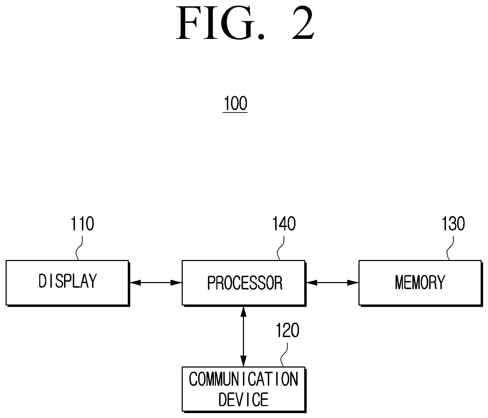

FIG. 2 is a block diagram provided to explain configuration of an electronic device according to an embodiment.

Referring to FIG. 2, the electronic device 100 includes the display 110, a communication device 120, 120, memory 130, and a processor 140.

The display 110 may include various types of display panels, such as, but not limited to, liquid crystal display (LCD) panels, organic light emitting diodes (OLED) panels, active-matrix organic light-emitting diodes (AM-OLED), liquid crystal on silicon (LcoS), quantum dot light-emitting diodes (QLED) and digital light processing (DLP), plasma display panel (PDP) panels, inorganic LED panels, micro LED panels, and the like. Meanwhile, the display 110 may also be configured as a touch screen with a touch panel, or may be consisted of a flexible panel.

Here, the display 110 may display a measurement position for measuring the signal strength of the wireless router. Further, the display 110 may display predicted positions of the plurality of first wireless routers based on the signal strengths of the wireless routers.

The communication device 120 may support establishing a direct (e.g., wired) communication channel or a wireless communication channel between the electronic device 100 and a wireless router, and performing communications over the established communication channel. The communication device 120 may include one or more communication processors that operate independently of the processor 140 and directly support wired or wireless communication. According to an embodiment, the communication device 120 may include a wireless communication module (e.g., a cellular communication module, a short-range communication module, or a global navigation satellite system (GNSS) communication module) or a wired communication module (e.g., a local area network (LAN) communication module or a power line communication module). The corresponding communication module among these communication modules may perform communication with a wireless router via a first network (e.g., a short-range communication network such as Bluetooth, wireless fidelity (Wi-Fi) direct, or infrared data association (IrDA)) or a second network (e.g., a long-range communication network such as a legacy cellular network, a 5G network, a next-generation communication network, the Internet, or a computer network (e.g., LAN or WAN)).

In particular, the communication device 120 may transmit/receive signals to/from a wireless router. Here, the signal strength of the wireless router may be measured based on the received signals of the wireless router.

The memory 130 temporarily or non-temporarily stores various programs or data, and transmits the stored information to the processor 140 according to the call of the processor 140. In addition, the memory 130 may store various information necessary for the calculation, processing, or control operation of the processor 140 in an electronic form.

The memory 130 may include at least one of, for example, main memory or auxiliary memory. The main memory may be implemented using a semiconductor storage medium such as ROM and/or RAM. The ROM may include, for example, conventional ROM, EPROM, EEPROM, and/or MASK-ROM. The RAM may include, for example, DRAM and/or SRAM. The auxiliary memory may be implemented using at least one storage medium capable of permanently or semi-permanently storing data, such as a flash memory device, a secure digital (SD) card, a solid state drive (SSD), a hard disk drive (HDD), a magnetic drum, optical media such as a compact disc (CD), a DVD or a laser disk, magnetic tape, a magneto-optical disk, and/or a floppy disk.

The memory 130 may store at least one instruction for the electronic device 100. In addition, the memory 130 may store an operating system (O/S) for operating the electronic device 100. The memory 130 may also store various software programs or applications for operating the electronic device 100 according to various embodiments of the present disclosure. The memory 130 may include volatile memory such as a frame buffer, semiconductor memory such as flash memory, or magnetic storage media such as a hard disk, or the like.

The memory 130 may store at least one instruction.

Meanwhile, the memory 130 may store a map of a preset space, a measurement position for measuring the signal strength of a wireless router, and the positions of a plurality of wireless routers located within a space. The memory 130 may also store, after measuring the signal strength of a wireless router, a changed position of the wireless router based on the measured signal strength at the measurement position.

The one or more processors may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors may control one or any combination of the other components of the electronic apparatus, and may perform communication-related operations or data processing. The one or more processors may execute one or more programs or instructions stored in memory. For example, the one or more processors may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to one or more embodiments, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors may be implemented as a single core processor comprising a single core, or as one or more multicore processors including a plurality of cores (e.g., homogeneous multicore or heterogeneous multicore). When the one or more processors are implemented as multicore processors, each of the plurality of cores included in a multicore processor may include a processor internal memory, such as a cache memory and an on-chip memory, and a common cache shared by the plurality of cores may be included in the multicore processor. Further, each of the plurality of cores (or some of the plurality of cores) included in the multi-core processor may independently read and perform program instructions to implement the method according to one or more embodiments, or all (or some) of the plurality of cores may be coupled to read and perform program instructions to implement the method according to one or more embodiments.

When a method according one or more embodiments includes a plurality of operations, the plurality of operations may be performed by one core of a plurality of cores included in a multi-core processor, or may be performed by a plurality of cores. For example, when a first operation, a second operation, and a third operation are performed by a method according to one or more embodiments, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor 140 may mean a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, etc., but the core is not limited to the embodiments of the present disclosure.

Specifically, the processor 140 may control the communication device 120 to measure first signal strengths of a plurality of first available wireless routers at a plurality of spaced positions adjacent to a first measurement position within a preset space. Here, the plurality of spaced positions adjacent to the first measurement position correspond to positions within the preset space from which the signals of the plurality of first wireless routers can be measured. In addition, the electronic device 100 may control the communication device 120 to measure the signals of the plurality of first wireless routers at the plurality of adjacent spaced positions in sequence, and then measure the signals of the plurality of first wireless routers at the first measurement position.

The processor 140 may predict the positions of the plurality of first available wireless routers based on the measured first signal strengths. In other words, the processor 140 may predict the positions of the plurality of first wireless routers using a method such as triangulation by considering the first signal strengths and directions of the plurality of first available wireless routers at the plurality of spaced positions adjacent to the first measurement position.

The processor 140 may determine a subsequent second measurement position within the preset space based on the predicted positions and the distances between the predicted positions. In other words, the processor 140 may calculate the distances between the positions of each of the plurality of first wireless routers, form a cluster of wireless routers with distances less than a preset reference distance, and determine the second measurement position to measure wireless router signals based on the corresponding cluster.

For example, when the positions of the four wireless routers are predicted by the first signal strengths measured at the plurality of spaced positions adjacent to the first measurement position, the processor 140 may calculate the distances between the three wireless routers and form a cluster including one wireless router and a cluster including three wireless routers. Here, the processor 140 may determine the center of the cluster including the three wireless routers as the second measurement position.

The processor 140 may control the display 110 to display information about the determined second measurement position. In other words, the electronic device 100 may then display on the display 110 the second measurement position to be moved to measure the signal strengths of the wireless routers.

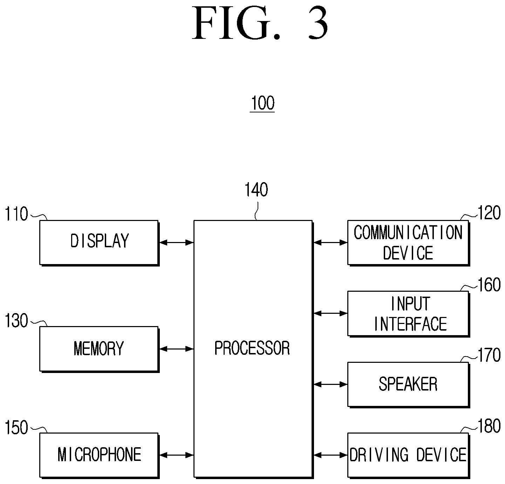

FIG. 3 is a block diagram provided to explain detailed configuration of an electronic device according to an embodiment.

Referring to FIG. 3, the electronic device 100 may include the display 110, the communication device 120, memory 130, a processor 140, a microphone 150, an input interface 160, a speaker 170, and a driving device 180. Hereinafter, detailed descriptions that overlap with the descriptions of FIG. 2 will be omitted.

The microphone 150 may refer to a module that obtains sound and converts it into an electrical signal, and may be condenser microphone, ribbon microphone, moving coil microphone, piezoelectric element microphone, carbon microphone, or micro electro mechanical system (MEMS) microphone. The microphone 150 may also be implemented in an omnidirectional, bidirectional, unidirectional, sub-cardioid, super-cardioid, or hyper-cardioid manner. In other words, the processor 140 may receive a starting voice from the user to determine a measurement position through the microphone 150, and may start determining the measurement position.

The input interface 160 includes circuitry, and may receive a user command for setting or selecting various functions supported by the electronic device 100. To this end, the input interface 160 may include a plurality of buttons, and may be implemented as a touch screen capable of performing the function of a display simultaneously.

In this case, the processor 140 may control the operations of the electronic device 100 based on the user command inputted via the input interface 160. For example, the processor 140 may control the electronic device 100 based on an on/off command of the electronic device 100, an on/off command of a function of the electronic device 100, or the like, inputted via the input interface 160.

The speaker 170 may output audio. Specifically, the processor 140 may output through the speaker 170 various notification sounds or voice guide messages related to the operations of the electronic device 100. In other words, the processor 140 may output through the speaker 170 a guide message indicating that a measurement position to measure the signal strength of a wireless router has been determined.

The driving device 180 may refer to a module that enables the electronic device 100 to be moved to various positions. The driving device 180 may consist of a gasoline engine, a diesel engine, a liquefied petroleum gas (LPG) engine, an electric motor, or the like, depending on the power source (e.g., fossil fuel, electricity) that generates power for the electronic device 100 to move. The driving device 180 may include a steering device (e.g., manual steering, hydraulics steering, electronic control power steering (EPS), etc.) for controlling the direction of movement.

The driving device 180 may include a unit (e.g., a wheel, a propeller, etc.) for moving the electronic device 100. Here, the driving device 180 may be modified and implemented according to the driving type (e.g., wheel type, walking type, flight type, etc.) of the electronic device 100. In other words, the processor 140 may control the driving device 180 to move to the measurement position and then measure the signal strength of the wireless router.

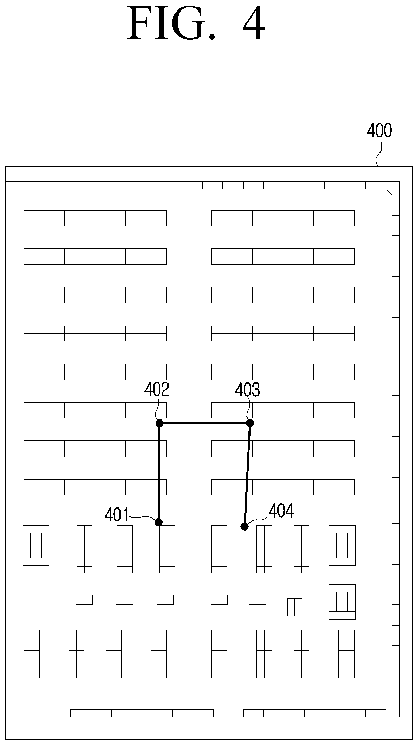

FIGS. 4 to 6 are views provided to explain a process of determining a measurement position according to an embodiment .

Referring to FIG. 4, the processor 140 may generate fingerprint information regarding a preset space 400 by measuring signal strength with each of a plurality of wireless routers at a plurality of positions within the preset space 400. Here, the preset space 400 may be outdoors or indoors where it is difficult to determine the position by GPS, such as grocery store, factory, school, department store, airport, logistics center, data center, etc. Also, with the preset space 400, there may be passageways through which people can move, and obstacles such as display shelves and furniture through which people cannot move. The processor 140 may measure signal strengths of each of a plurality of wireless routers at a plurality of spaced positions 401, 402, 403 adjacent to a first measurement position 404 within the preset space 400. Here, the signal strength of each of the plurality of wireless routers may be measured in the order of the plurality of spaced positions 401, 402, 403. The processor 140 may measure the signal strengths of the plurality of wireless routers at the first measurement position 404 following the plurality of spaced positions 401, 402, 403 to measure the first signal strengths. Here, the plurality of spaced positions may include at least three positions.

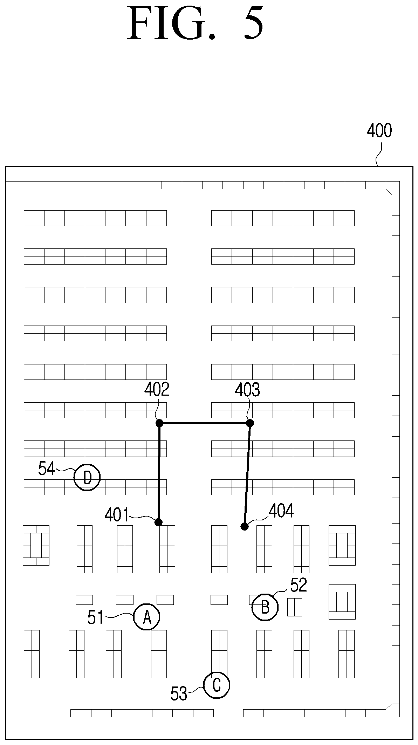

Referring to FIG. 5, the processor 140 may control the communication device 120 to measure the first signal strengths of a plurality of first available wireless routers 51, 52, 53, 54 at the plurality of spaced positions 401, 402, 403 adjacent to the first measurement position 404 within the preset space 400. Specifically, the processor 140 may measure the first signal strength of each of the plurality of first wireless routers 51, 52, 53, 54 at the plurality of spaced positions 401, 402, 403 and the first measurement position 404. In other words, the first signal strengths of the plurality of first wireless routers 51, 52, 53, 54 measured at the plurality of spaced positions and the first position 404 may vary depending on the measurement position. Here, the processor 140 may determine to which wireless router each of the first signal strengths of the plurality of first wireless routers 51, 52, 53, 54, which vary depending on the measurement position, corresponds.

The processor 140 may predict the positions of the plurality of first available wireless routers 51, 52, 53, 54 based on the first signal strengths. In other words, the processor 140 may predict the positions of the plurality of first available wireless routers 51, 52, 53, 54 based on the first signal strengths which vary depending on the measurement position. In the case of such position prediction, the processor 140 may roughly predict the positions using a method capable of predicting positions, such as triangulation.

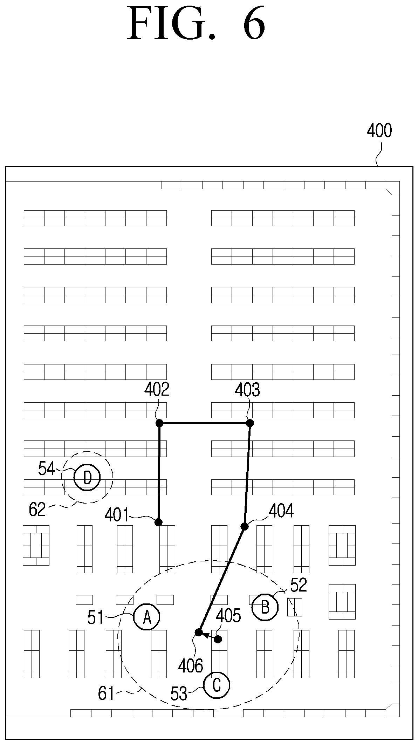

Referring to FIG. 6, the processor 140 may determine a subsequent second measurement position 406 within the preset space 400 based on the predicted positions of the plurality of first wireless routers 51, 52, 53, 54 and distances between the predicted positions of the plurality of first wireless routers 51, 52, 53, 54. Specifically, the processor 140 may calculate distances between the positions of the plurality of first wireless routers 51, 52, 53, 54 and form a plurality of clusters 61, 62 corresponding to the plurality of first wireless routers 51, 52, 53, 54 based on the calculated distances and a preset reference distance. Here, the processor 140 may form a cluster of wireless routers located at or below a preset reference distance from a particular position, and the method of forming a cluster of the plurality of wireless routers is not limited thereto.

The processor 140 may determine the cluster including the most wireless routers among the plurality of clusters 61, 62 as a first cluster 61. Subsequently, the processor 140 may determine the center 405 of the first cluster as the second measurement position. As such, when the signal strength is measured at the center of the cluster, the signal strength of the wireless router can be measured at a location close to the wireless router, and as a result, the signal strength can be measured more accurately than when the signal strength of the wireless router is measured at a distant position. In addition, when the signal strength of the wireless router is measured at the center of the cluster including the most wireless routers, signals of more wireless routers can be accurately measured.

Here, the processor 140 may identify whether an obstacle exists at the center 405 of the first cluster. When the center 405 of the first cluster is determined to be the second measurement position even though there is an obstacle that the user cannot access, the processor 140 cannot accurately measure the strength of the wireless router signal. Therefore, when an obstacle is identified at the center 405 of the first cluster, the processor 140 may determine the second measurement position based on the position of the obstacle. In other words, the processor 140 may determine the closest position among the positions accessible by the user from the position of the identified obstacle as the second measurement position. In conclusion, the processor 140 may identify that an obstacle exists at the center 405 of the first cluster, and determine a position closest to the center 405 of the first cluster as the second measurement position 406.

Meanwhile, when the processor 140 fails to identify an obstacle even though there is an obstacle at the center 405 of the first cluster, the center 405 of the first cluster may be determined to be the second measurement position. In this case, when it is determined that the electronic device 100 is present within a preset range with reference to the center 405 of the first cluster, the processor 140 may measure the signal strengths of the plurality of wireless routers based on the corresponding position.

Subsequently, the processor 140 may control the display 110 to display information about the determined second measurement position 406. Here, the information about the second measurement position 406 may be a coordinate value within the preset space 400, and may be a circular point at a position corresponding to the coordinate value. In addition, the processor 140 may indicate that the second measurement position 406 is the position where the signal strength of the wireless router is to be measured following the first measurement position 404.

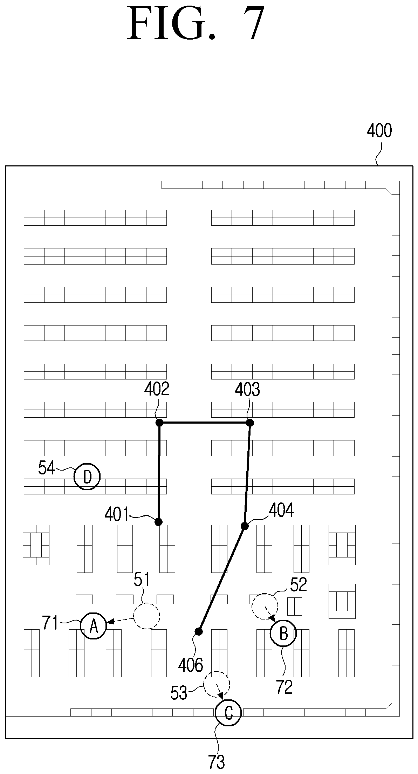

FIG. 7 is a view provided to explain a process of changing a position of a wireless router according to an embodiment.

Referring to FIG. 7, the processor 140 may control the communication device 120 to measure second signal strengths from the plurality of second available wireless routers at the second measurement position. Here, the processor 140 may control the driving device 180 to move to the measurement position, or may be moved by a user, and then measure the second signal strengths of the plurality of second wireless routers.

The processor 140 may change the position of at least one of the plurality of first wireless routers 51, 52, 53, 54 based on the measured second signal strengths. Here, the processor 140 may change the positions of the first wireless router 51, 52, 53, 54 corresponding to the first cluster 61 among the plurality of first wireless routers 51, 52, 53, 54. In other words, the positions of the first wireless router 51, 52, 53 predicted by the first signal strengths measured by the processor 140 may be a rough estimate, so the processor 140 may further use the second signal strengths measured at the second measurement position 406 to re-determine the exact positions of the first wireless router 51, 52, 53, and change the positions of the first wireless router 51, 52, 53. In this way, the processor 140 may measure the signal strengths from the first wireless router 71, 72, 73 at more accurate positions. As such, when the position of the wireless router is changed, the more accurate position may be predicted when the position of the wireless router is subsequently predicted again and accordingly, a more optimized measurement position may be determined.

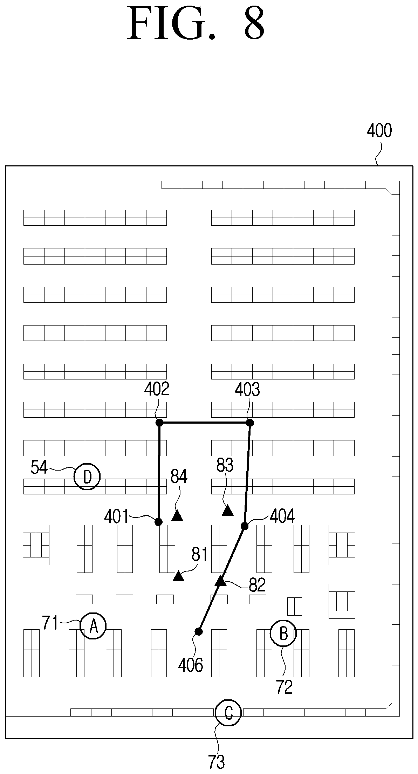

FIG. 8 is a view provided to explain a process of generating interpolated signal strength according to an embodiment.

Referring to FIG. 8, the processor 140 may determine positions 81, 82, 83, 84 for generating an interpolated signal based on the first measurement position 404, the plurality of spaced positions 401, 402, 403 adjacent to the first measurement position, and the second measurement position 406. Here, the processor 140 may determine a position 82 for generating an interpolated signal between the first measurement position 404 and the second measurement position 406, a position 83 for generating an interpolated signal between the first measurement position 404 and the position 403 adjacent to the first measurement position, a position 84 for generating an interpolated signal between the first measurement position 404 and the position 402 adjacent to the first measurement position, and a position 84 for generating an interpolated signal between the first measurement position 404 and the position 401 adjacent to the first measurement position.

The processor 140 may generate an interpolated signal strength based on the positions 81, 82, 83, 84 determined to generate the interpolated signal and the first signal strengths of the plurality of first wireless routers 71, 72, 73, 54. When such an interpolated signal is generated as described above, even if the signal strength of the wireless router is not measured at the corresponding location, a highly reliable signal strength can be generated, so that the cost for measuring the signal strength of the wireless router can be reduced.

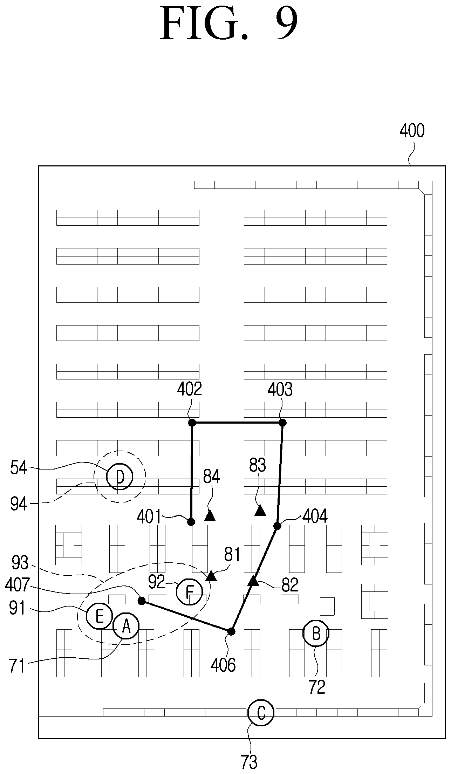

FIG. 9 is a view provided to explain a process of determining a measurement position according to an embodiment.

Referring to FIG. 9, the processor 140 may predict the positions of the plurality of second wireless routers based on the second signal strengths of the relocated first wireless routers 71, 72, 73 and a plurality of second wireless routers 91, 92, 54. Here, the plurality of second wireless routers 91, 92, 54 may include at least one of the plurality of first wireless routers, or may not include the plurality of first wireless routers.

The processor 140 may determine a subsequent third measurement position within the preset space 400 based on the predicted positions of the plurality of second wireless routers 91, 92, 54 and distances between the predicted positions of the plurality of second wireless routers 91, 92, 54.

Specifically, the processor 140 may calculate distances between the positions of the plurality of second wireless routers 91, 92, 54, and form a plurality of clusters 93, 94 corresponding to the plurality of second wireless routers 91, 92, 54 based on the calculated distances and a preset reference distance. Here, the processor 140 may form a cluster of wireless routers that are located at or below the preset reference distance from a particular position, and the method of forming a cluster of the plurality of wireless routers is not limited thereto.

The processor 140 may form a plurality of clusters 93, 94 based on the distances between the positions of the wireless routers excluding the wireless routers 71, 72, 73 corresponding to the first cluster among the plurality of second wireless routers 91, 92, 54. As such, when the wireless routers 71, 72, 73 corresponding to the first cluster are excluded, it is possible to prevent repeatedly determining the positions where the signal strengths of the wireless routers have already been measured.

The processor 140 may determine the cluster including the most wireless routers among the plurality of clusters 93, 94 as the second cluster 93. Subsequently, the processor 140 may determine the center 407 of the second cluster as the third measurement position. As such, when the signal strength is measured at the center of the cluster, the signal strength of the wireless router may be measured at a position close to the wireless router, as a result, the signal strength can be measure more accurately than when the signal strength of the wireless router is measured at a distant position. Also, when the signal strength of the wireless router is measured at the center of the cluster including the most wireless routers, the signals of more wireless routers can be measured accurately.

Here, the processor 140 may identify whether an obstacle exists at the center 407 of the second cluster. When the center 407 of the second cluster is determined to be the third measurement position even though there is an obstacle that the user cannot access, the processor 140 cannot accurately measure the strength of the wireless router signal. Therefore, when an obstacle is identified at the center 407 of the first cluster, the processor 140 may determine the third measurement position based on the position of the obstacle. In other words, the processor 140 may determine the closest position among the positions accessible by the user from the position of the identified obstacle as the third measurement position. In conclusion, the processor 140 may identify that no obstacle exists at the center 407 of the first cluster, and determine the center 407 of the first cluster as the third measurement position.

Meanwhile, when the processor 140 fails to identify an obstacle even though there is an obstacle at the center 407 of the second cluster, the center 407 of the first cluster may be determined to be the third measurement position. In this case, when it is determined that the electronic device 100 is present within a preset range with reference to the center 407 of the first cluster, the processor 140 may measure the signal strengths of the plurality of wireless routers based on the corresponding position.

The processor 140 may then control the display 110 to display information about the determined third measurement position 407. Here, the information about the third measurement position 407 may be a coordinate value within the preset space 400, and may be a circular point at a position corresponding to the coordinate value. In addition, the processor 140 may indicate that the third measurement position 407 is the position where the signal strength of the wireless router is to be measured following the second measurement position 406.

Further, the processor 140 may measure the signal strengths of the plurality of wireless routers at the third measurement position 407 to change the positions of one or more of the plurality of second wireless routers.

Meanwhile, the processor 140 may calculate the area of the first cluster 61, and determine whether the area of the first cluster is equal to or greater than a preset ratio of the area of the preset space 400. When the area of the first cluster is equal to or greater than the preset ratio of the area of the preset space 400, the processor 140 may terminate the determination of the measurement position. In other words, the processor 140 may measure the signal strength of the wireless router at the second measurement position 406 and then determine whether the area of the first cluster is equal to or greater than the preset ratio of the area of the preset space 400 to whether to terminate the determination of the subsequent measurement position.

The processor 140 may calculate the area of the first cluster 61 and the second cluster 93 at the third measurement position 407, and determine whether the area of the first cluster and the second cluster is equal to or greater than the preset ratio of the area of the preset space. When the area of the first cluster and the second cluster is equal to or greater than the preset ratio of the area of the preset space, the processor 140 may terminate the determination of the measurement position. In other words, when the determination of the measurement position is terminated based on the area of the cluster, it is possible to prevent repeatedly determining the positions where the signal strengths of the wireless routers are to be measured.

When the area of the first cluster and the second cluster is not equal to or greater than the preset ratio of the area of the preset space, the processor 140 may determine a measurement position for measuring the signal strengths of the wireless routers until the area of the first cluster and the second cluster becomes equal to or greater than the preset ratio of the area of the preset space.

When the determination of the measurement position is terminated as described above, the processor 140 may control the display 110 to display information regarding the termination of the measurement position.

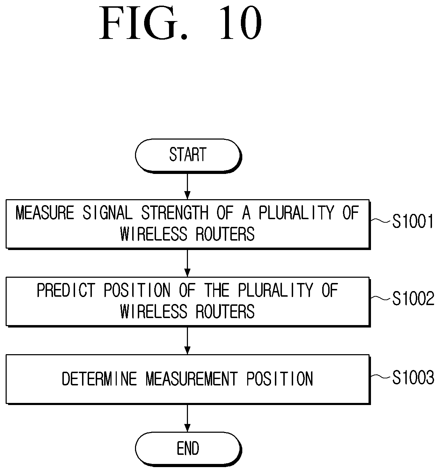

FIG. 10 is a flowchart provided to explain a process of determining a measurement position according to an embodiment.

Referring to FIG. 10, signals of a plurality of wireless routers may be measured (S1001). Here, the measurement positions for measuring the signals of the plurality of wireless routers may be arbitrarily determined. Further, a plurality of signals may be measured at at least three measurement positions, corresponding to the positions where the signal strengths are initially measured.

Subsequently, the positions of the plurality of wireless routers may be predicted (S1002). Based on the signal strengths of the plurality of wireless routers measured in step S1001, the positions of the plurality of wireless routers may be predicted. In this case, considering the characteristic that the signal strengths of the plurality of wireless routers attenuate with distance, the positions of the wireless routers may be determined using a method such as triangulation.

Next, a measurement position for measuring the signal strengths of the plurality of wireless routers may be determined (S1003). When the positions of the plurality of wireless routers are predicted, the position where multiple wireless routers are gathered may be determined to be the measurement position to be measured next.

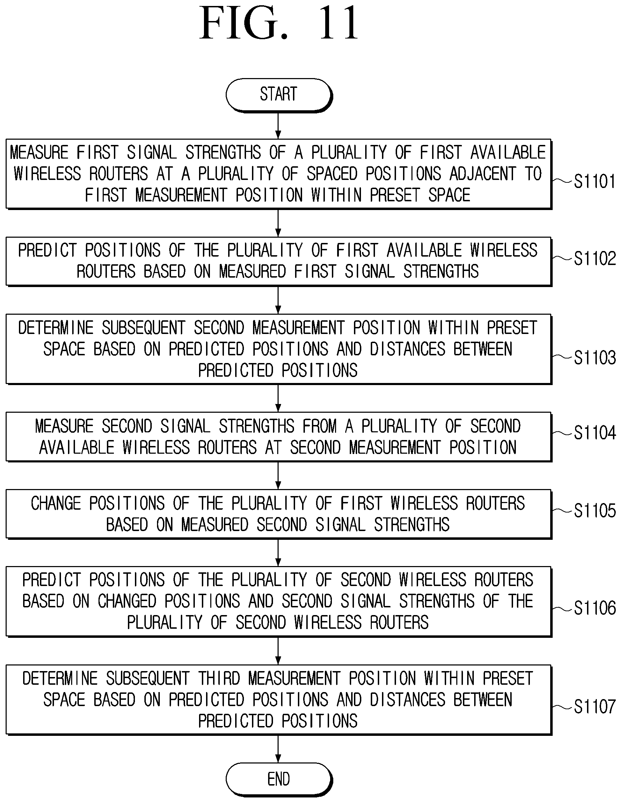

FIG. 11 is a flowchart provided to explain a detailed process of determining a measurement position according to an embodiment.

Referring to FIG. 11, first signal strengths of a plurality of first available wireless routers at a plurality of spaced positions adjacent to a first measurement position within a preset space may be measured (S1101). Here, the plurality of spaced positions adjacent to the first measurement position may include at least three or more positions. In addition, the first signal strengths may be measured by measuring the signal strengths of the plurality of first wireless routers at the plurality of spaced positions and measuring the signal strengths of the plurality of first wireless routers at the first measurement position.

Based on the measured first signal strengths, the positions of the plurality of first available wireless routers may be predicted (S1102).

Subsequently, based on the predicted positions and the distances between the predicted positions, a subsequent second measurement position within the preset space may be determined (S1103). Here, a position for generating an interpolated signal may be determined based on the first measurement position, the plurality of spaced positions adjacent to the first measurement position, and the second measurement position. Further, the interpolated signal strength may be generated based on the determined positions and the first signal strengths of the plurality of first wireless routers.

Next, second signal strengths may be measured from a plurality of second available wireless routers at the second measurement position (S1104).

Based on the measured second signal strengths, the positions of the plurality of first wireless routers may be changed (S1105). Specifically, the positions of the plurality of wireless routers may be re-determined based on the measured second signal strengths, such that the existing predicted positions are changed to the newly re-determined positions.

Based on the changed positions and the second signal strengths of the plurality of second wireless routers, the positions of the plurality of second wireless routers may be predicted (S1106).

Based on the predicted positions and the distances between the predicted positions, a subsequent third measurement position within the preset space may be determined (S1107).

Meanwhile, in step S1103, distances between positions of the plurality of first wireless routers may be calculated, and a plurality of clusters corresponding to the plurality of first wireless routers may be formed based on the calculated distances and a preset reference distance. Then, a cluster including the most wireless routers among the plurality of clusters may be determined to be a first cluster, and the center of the first cluster may be determined to be a second measurement position.

Meanwhile, in step S1107, distances between positions of the plurality of second wireless routers may be calculated, and a plurality of clusters corresponding to the plurality of second wireless routers may be formed based on the calculated distances and a preset reference distance. Here, a plurality of clusters may be formed based on the distances between the positions of the wireless routers excluding the wireless routers corresponding to the first cluster among the plurality of second wireless routers. Then, a cluster including the most wireless routers among the plurality of clusters may be determined to be a second cluster, and the center of the second cluster may be determined to be a third measurement position.

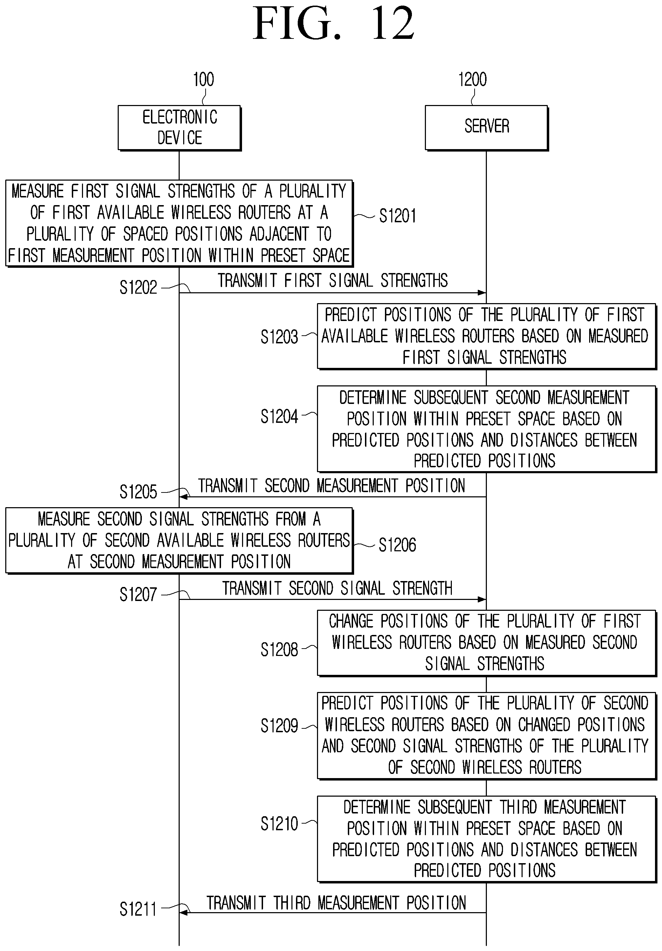

FIG. 12 is a sequence view provided to explain a controlling method of an electronic device and a server according to an embodiment.

First, the electronic device 100 may measure first signal strengths of a plurality of first available wireless routers at a plurality of spaced positions adjacent to a first measurement position within a preset space (S1201). In this case, the plurality of spaced positions adjacent to the first measurement position may be at least three or more.

The electronic device 100 may then transmit the first signal strengths of the plurality of first wireless routers to a server 1200 (S 1202).

Subsequently, the server 1200 may predict the positions of the plurality of first available wireless routers based on the measured first signal strengths received from the electronic device 100 (S1203). Here, the server 1200 may predict the positions of the plurality of first wireless routers using a method such as triangulation based on the characteristic that the signal strengths of the wireless routers attenuate with distance.

Next, the server 1200 may determine a subsequent second measurement position within the preset space based on the predicted positions and distances between the predicted positions (S1204). In this case, the server 1200 may determine the second measurement position by forming a plurality of clusters corresponding to the plurality of first wireless routers.

The server 1200 may then transmit the determined second measurement position to the electronic device 100 (S1205).

Subsequently, the electronic device 100 may measure second signal strengths from a plurality of second available wireless routers at the second measurement position received from the server 1200 (S1206).

The electronic device 100 may then transmit the second signal strengths measured from the plurality of second wireless routers to the server 1200 (S1207).

Next, the server 1200 may change the positions of the plurality of first wireless routers based on the measured second signal strengths received from the electronic device 100 (S1208). In this case, the server 1200 may measure the signal strength at a position relatively close to the positions of the plurality of first wireless routers, making it possible to predict and change the positions of the plurality of first wireless routers more accurately.

The server 1200 may then predict the positions of the plurality of second wireless routers based on the changed positions and the second signal strengths of the plurality of second wireless routers. Similarly, the server 1200 may predict the positions of the plurality of second wireless routers using a method such as triangulation based on the characteristic that the signal strengths of the wireless routers attenuate with distance.

Subsequently, the server 1200 may determine a subsequent third measurement position within the preset space based on the predicted positions and distances between the predicted positions, and may transmit the third measurement position to the electronic device 100 (S1210, S1211). Here, the server 1200 may determine the third measurement position by forming a plurality of clusters corresponding to the plurality of second wireless routers.

Meanwhile, according to an embodiment, various embodiments described above may be implemented in software including an instruction stored in a machine-readable storage medium (e.g., computer). A machine may be a device that invokes the stored instruction from the storage medium and is operated based on the invoked instruction, and may include a device according to embodiments disclosed herein. In case that the instruction is executed by the processor, the processor may directly perform a function corresponding to the instruction or other components may perform the function corresponding to the instruction under control of the processor. The instruction may include codes provided or executed by a compiler or an interpreter. The machine-readable storage medium may be provided in a form of a non-transitory storage medium. Here, the term "non-transitory" means that the storage medium is tangible without including a signal (e.g.: electromagnetic waves), and does not distinguish whether data are semi-permanently or temporarily stored in the storage medium. For example, the non-transitory storage medium' may include a buffer where data is temporarily stored.

According to one or more embodiments, the methods according to the various embodiments disclosed in this document may be included and provided in a computer program product. The computer program product may be traded as a product between a seller and a purchaser. The computer program product may be traded as a product between a seller and a purchaser. The computer program product can be distributed in the form of a storage medium that is readable by machines (e.g.: a compact disc read only memory (CD-ROM)), or distributed directly on-line (e.g.: download or upload) through an application store (e.g.: PlayStore^{™}), or between two user devices (e.g.: smartphones). In the case of on-line distribution, at least a portion of a computer program product (e.g.: a downloadable app) may be stored in a storage medium readable by machines such as the server of the manufacturer, the server of the application store, or the memory 140 of the relay server at least temporarily, or may be generated temporarily.

Hereinabove, the embodiments of the disclosure have been described, but the disclosure is not limited to the specific embodiment and may be variously modified by a person skilled in the art to which the disclosure pertains without departing from the gist of the disclosure as claimed herein, and such modifications should not be understood in isolation from the technical concepts or prospects of the disclosure.

## Claims

1. An electronic device comprising:
a display;
a communication device for transmitting/receiving a signal to/from a wireless router;
memory storing at least one instruction; and
at least one processor that executes the at least one instruction to measure signal strength with each of a plurality of wireless routers at a plurality of positions within a preset space to generate fingerprint information,
wherein the processor is configured to:
control the communication device to measure first signal strengths of a plurality of first available wireless routers at a plurality of spaced positions adjacent to a first measurement position within the preset space;
predict positions of the plurality of first available wireless routers based on the measured first signal strengths;
determine a subsequent second measurement position within the preset space based on the predicted positions and distances between the predicted positions; and
control the display to display information about the determined second measurement position.

2. The device as claimed in claim 1, wherein the processor is configured to:
control the communication device to measure second signal strengths from a plurality of second available wireless routers at the second measurement position;
change a position of at least one of the plurality of first wireless routers based on the measured second signal strengths;
predict positions of a plurality of second wireless routers based on the changed position and the second signal strengths of the plurality of second wireless routers;
determine a subsequent third measurement position within the preset space based on the predicted positions and distances between the predicted positions; and
control the display to display information about the determined third measurement position.

3. The advice as claimed in claim 1, wherein the processor is configured to:
determine a position to generate an interpolated signal based on the first measurement position, the plurality of spaced positions adjacent to the first measurement position, and the second measurement position; and
generate the interpolated signal strength based on the determined position and the first signal strengths of the plurality of first wireless routers.

4. The device as claimed in claim 1, wherein the plurality of spaced positions adjacent to the first measurement position includes at least three positions;
wherein the signal strengths of the plurality of first wireless routers are measured at the plurality of spaced positions; and
wherein the first signal strengths are measured by measuring the signal strengths of the plurality of first wireless routers at the first measurement position.

5. The device as claimed in claim 2, wherein the processor is configured to:
calculate distances between positions of the plurality of first wireless routers;
form a plurality of clusters corresponding to the plurality of first wireless routers based on the calculated distances and a preset reference distance; and
determine the second measurement position based on the plurality of clusters.

6. The device as claimed in claim 5, wherein the processor is configured to:
determine a cluster including most wireless routers among the plurality of clusters as a first cluster; and
determine a center of the first cluster as the second measurement position.

7. The device as claimed in claim 6, wherein the processor is configured to:
calculate distances between positions of the plurality of second wireless routers;
form a plurality of clusters corresponding to the plurality of second wireless routers based on the calculated distances and a preset reference distance; and
determine a third measurement position based on the plurality of clusters.

8. The device as claimed in claim 7, wherein the processor is configured to:
form a plurality of clusters based on distances between wireless routers excluding a wireless router corresponding to the first cluster among the plurality of second wireless routers; and
determine a cluster including most wireless routers among the plurality of clusters as a second cluster.

9. The device as claimed in claim 6, wherein the processor is configured to:
identify whether there is an obstacle at a center of the first cluster; and
based on the obstacle being identified, determine the second measurement position based on a position of the obstacle.

10. The device as claimed in claim 6, wherein the processor is configured to:
calculate a size of the first cluster;
determine whether the size of the first cluster is equal to or greater than a preset ratio of a size of the preset space;
based on the size of the first cluster being equal to or greater than the preset ratio of the size of the preset space, terminate the determination of the measurement position.

11. A controlling method of an electronic device that, by measuring signal strength with each of a plurality of wireless routers at a plurality of positions within a preset space, generates fingerprint information regarding the preset space, the method comprising:
controlling a communication device to measure first signal strengths of a plurality of first available wireless routers at a plurality of spaced positions adjacent to a first measurement position within the preset space;
predicting positions of the plurality of first available wireless routers based on the measured first signal strengths;
determining a subsequent second measurement position within the preset space based on the predicted positions and distances between the predicted positions; and
controlling the display to display information about the determined second measurement position.

12. The method as claimed in claim 11, comprising:
controlling the communication device to measure second signal strengths from a plurality of second available wireless routers at the second measurement position;
changing a position of at least one of the plurality of first wireless routers based on the measured second signal strengths;
predicting positions of a plurality of second wireless routers based on the changed position and the second signal strengths of the plurality of second wireless routers;
determining a subsequent third measurement position within the preset space based on the predicted positions and distances between the predicted positions; and
controlling the display to display information about the determined third measurement position.

13. The method as claimed in claim 11, comprising:
determining a position to generate an interpolated signal based on the first measurement position, the plurality of spaced positions adjacent to the first measurement position, and the second measurement position; and
generating the interpolated signal strength based on the determined position and the first signal strengths of the plurality of first wireless routers.

14. The method as claimed in claim 11, wherein the plurality of spaced positions adjacent to the first measurement position includes at least three positions;
wherein the signal strengths of the plurality of first wireless routers are measured at the plurality of spaced positions; and
wherein the first signal strengths are measured by measuring the signal strengths of the plurality of first wireless routers at the first measurement position.

15. The method as claimed in claim 12, wherein the determining a second measurement position comprises:
calculating distances between positions of the plurality of first wireless routers;
forming a plurality of clusters corresponding to the plurality of first wireless routers based on the calculated distances and a preset reference distance; and
determining the second measurement position based on the plurality of clusters.
